# EUROPEAN PATENT SPECIFICATION

(11) **EP 4 022 409 B1**
(45) Date of publication and mention of the grant of the patent: **24.01.2024**
(21) Application number: 19942684.2
(22) Date of filing: 28.08.2019
(51) Int. Cl.: G05D 1/02

(54) **APPARATUS AND METHOD FOR SECONDARY POSITIONING OF AUTOMATIC GUIDED VEHICLE**
GERÄT UND VERFAHREN ZUR SEKUNDÄRPOSITIONIERUNG EINES AUTOMATISCH GEFÜHRTEN FAHRZEUGS
APPAREIL ET PROCÉDÉ DE POSITIONNEMENT SECONDAIRE D'UN VÉHICULE À GUIDAGE AUTOMATIQUE

(43) Date of publication of application: 06.07.2022
(73) Proprietor: ABB SCHWEIZ AG, 5400 Baden (CH)
(72) Inventor: HU, Funing, Shanghai 201318 (CN); ZHANG, Huiyun, Suzhou, Jiangsu 215300 (CN)
(74) Representative: Zimmermann & Partner Patentanwälte mbB
(86) International application number: PCT/CN2019/103091
(87) International publication number: WO 2021/035579

(56) References cited:
- WO-A1-2019/069921
- CN-A- 101 842 759
- CN-A- 106 527 443
- CN-A- 107 450 549
- CN-U- 209 037 711
- JP-A- 2000 330 635
- JP-A- 2001 005 525
- JP-A- 2004 086 453

## Description

### FIELD

Embodiments of the present disclosure relate to apparatus and method for secondary positioning of a vehicle, an automatic guided vehicle comprising the apparatus, and an automatic guided system comprising the automatic guided vehicle.

### BACKGROUND

Automatic guided vehicle (AGV) is utilized in a manufacturing plant for material handling or transferring. The AGV refers to a transport vehicle that is equipped with an automatic guiding device and capable of traveling along a prescribed guiding path. Navigation and positioning of the AGV are generally important in practice of the AGV.

The navigation of the AGV adopts several approaches such as magnetic tape line guiding, simultaneous locating and mapping (SLAM), reflective plate laser scan, vision guiding, inertial guiding based on gyroscope, or combination thereof, etc. In the magnetic tape line guiding, magnetic tapes are attached onto a floor surface of the manufacturing plant, and the navigation is realized through magnetic induction signals.

Since loads on the AGV may be different and braking distances of the AGV from a braking point may be different for various customized processes, actual stop positions of the AGV may be different in the respective customized processes when the AGV arrives near a target stop position. Therefore, secondary positioning of the AGV after its stop is required to ensure appropriate coupling of the AGV and peripheral equipment for the AGV. An offset between the actual stop position of the AGV and the target stop position should be identified so as to adjust the secondary positioning of the AGV

In practice of the AGV, the actual stop position of the AGV has a poor repeatability. It is desirable to provide an improved solution for the secondary positioning of the AGV relative to the peripheral equipment.

Automatic guided vehicles are known from the Japanese Patents JP 2000 330635 A and JP 2001 005525 A.

### SUMMARY

Generally, embodiments of the present disclosure are directed to apparatus and method for secondary positioning of a vehicle, an automatic guided vehicle comprising the apparatus, and an automatic guided system comprising the automatic guided vehicle, which capable of providing an effective solution to ensure the repeatability for the secondary positioning, which has improved robustness for the AGV and reliable measurement signal not sensible to environments and various applications.

In a first aspect, embodiments of the present disclosure provide an apparatus for secondary positioning of a vehicle. The apparatus comprises: a first magnetic sensor disposed on the vehicle and configured to measure a first misalignment between the first magnetic sensor and a first magnetic tape after the vehicle changes from travelling to stop and to generate a first offset signal representing the first misalignment, wherein the first magnetic tape extends in a direction intersecting with a travelling path of the vehicle; and a controller configured to control the vehicle based at least in part on the first offset signal to thereby adjust a positioning of the vehicle and/or a peripheral equipment associated with the vehicle.

Compared with the conventional solutions, the apparatus according to embodiments of the present disclosure may provide a large adjusting range for the secondary positioning, an accurate compensation amount based on the reliable offset measurement signal from the magnetic sensor, less calculation work and fast response for the controller, and no limitation of AGV applications.

In some embodiments, the controller is further configured to: generate a compensation signal based on the first offset signal; and control the vehicle to cause drive wheels of the vehicle to shift so as to adjust the positioning of the vehicle based on the compensation signal.

In some embodiments, the controller is further configured to: generate a compensation signal based on the first offset signal; control the vehicle to remain stationary; and send the compensation signal to the peripheral equipment to cause the peripheral equipment to adjust the positioning of the peripheral equipment based on the compensation signal.

In some embodiments, the first magnetic tape extends in the direction perpendicular to the travelling path.

In some embodiments, the first magnetic sensor is disposed in parallel with the travelling path on the vehicle.

In some embodiments, the first magnetic sensor is configured to measure the first misalignment between a center of the first magnetic sensor and a center line of the first magnetic tape.

In some embodiments, the first magnetic tape is disposed at a target stop position for the vehicle.

In some embodiments, a polarity of the first magnetic tape is opposite to a polarity of a second magnetic tape that is disposed along the travelling path for navigating the vehicle.

In some embodiments, the apparatus further comprises: a second magnetic sensor disposed on the vehicle and configured to measure a second misalignment between the second magnetic sensor and a second magnetic tape after the stop of the vehicle and to generate a second offset signal representing the second misalignment, the second magnetic tape disposed along the travelling path for navigating the vehicle; and a third magnetic sensor disposed on the vehicle and configured to measure a third misalignment between the third magnetic sensor and the second magnetic tape after the stop of the vehicle and to generate a third offset signal representing the third misalignment, wherein the controller is configured to control the vehicle based on the first offset signal, the second offset, and the third offset signal.

In some embodiments, the second magnetic sensor is disposed perpendicular to the travelling path on a front side of the vehicle and configured to measure the second misalignment between a center of the second magnetic sensor and a center line of the second magnetic tape; and the third magnetic sensor is disposed perpendicular to the travelling path on a rear side of the vehicle and configured to measure the third misalignment between a center of the third magnetic sensor and the center line of the second magnetic tape.

In a second aspect, embodiments of the present disclosure provide an automatic guided vehicle. The automatic guided vehicle comprises the apparatus described above.

In some embodiments, the automatic guided vehicle further comprises: a wireless reader configured to detect a predetermined stop command point disposed on the travelling path and to generate a stop command signal in response to detecting the predetermined stop command point.

In some embodiments, the controller is further configured to control the vehicle to brake in response to the stop command signal.

In a third aspect, embodiments of the present disclosure provide an automatic guided system. The automatic guided system comprises: the automatic guided vehicle described above; and the first magnetic tape extending in the direction intersecting with the travelling path of the automatic guided vehicle.

In some embodiments, the first magnetic tape extends in the direction perpendicular to the travelling path.

In some embodiments, the automatic guided system further comprises: a second magnetic tape disposed along the travelling path for navigating the automatic guided vehicle, and having a polarity opposite to that of the first magnetic tape.

In a fourth aspect, embodiments of the present disclosure provide a method for secondary positioning of a vehicle. The method comprises: receiving a first offset signal representing a first misalignment between a first magnetic sensor disposed on the vehicle and a first magnetic tape extending in a direction intersecting with a travelling path of the vehicle, after the vehicle changes from travelling to stop; and controlling the vehicle at least in part based on the first offset signal to thereby adjust a positioning of the vehicle and/or a periphery equipment associated with the vehicle.

In some embodiments, controlling the vehicle to adjust the positioning comprises: generating a compensation signal based on the first offset signal; and controlling the vehicle to cause drive wheels of the vehicle to shift so as to adjust the positioning of the vehicle based on the compensation signal.

In some embodiments, controlling the vehicle to adjust the positioning comprises: generating a compensation signal based on the first offset signal; controlling the vehicle to remain stationary; and sending the compensation signal to the peripheral equipment to cause the peripheral equipment to adjust the positioning of the peripheral equipment based on the compensation signal.

In some embodiments, the method further comprises: receiving a second offset signal representing a second misalignment between a second magnetic sensor disposed on the vehicle and a second magnetic tape disposed along the travelling path, after the stop of the vehicle; receiving a third offset signal representing a third misalignment between a third magnetic sensor disposed on the vehicle and the second magnetic tape, after the stop of the vehicle; and generating the compensation signal based on the first offset signal, the second offset signal, and the third offset signal.

According to embodiments of the present disclosure, the appropriate coupling of the AGV and the peripheral equipment associated with the AGV is achieved by an effective solution to ensure the repeatability for the secondary positioning, which has improved robustness for the AGV and reliable measurement signal not sensible to environments and various applications.

### BRIEF DESCRIPTION OF THE DRAWINGS

Embodiments are shown and illustrated with reference to the drawings. The drawings serve to illustrate the basic principle, so that only aspects necessary for understanding the basic principle are illustrated. The drawings are not to scale. For a more complete understanding of the present invention, and the advantages thereof, reference is now made to the following descriptions taken in conjunction with the accompanying drawings, in which:
Fig. 1 illustrates a block diagram of an apparatus for secondary positioning of a vehicle according to an embodiment of the present disclosure;
Fig. 2 illustrates a schematic diagram of a vehicle on a traveling path according to an embodiment of the present disclosure;
Fig. 3 illustrates a schematic diagram of a vehicle at a predetermined stop command point according to an embodiment of the present disclosure;
Fig. 4 illustrates a schematic diagram of a vehicle at an actual stop position according to an embodiment of the present disclosure;
Fig. 5 illustrates a schematic diagram of secondary positioning of a vehicle relative to a peripheral equipment according to an embodiment of the present disclosure; and
Fig. 6 illustrates a flow chart of a method for secondary positioning of a vehicle according to an embodiment of the present disclosure.

### DETAILED DESCRIPTION

The subject matter described herein will now be discussed with reference to several example embodiments. These embodiments are discussed only for the purpose of enabling those skilled persons in the art to better understand and thus implement the subject matter described herein, rather than suggesting any limitations on the scope of the subject matter.

The term "comprises" or "includes" and its variants are to be read as open terms that mean "includes, but is not limited to." The term "or" is to be read as "and/or" unless the context clearly indicates otherwise. The term "based on" is to be read as "based at least in part on." The term "one embodiment" and "an embodiment" are to be read as "at least one embodiment." The term "another embodiment" is to be read as "at least one other embodiment." Unless specified or limited otherwise, the terms "mounted," "connected," "supported," and "coupled" and variations thereof are used broadly and encompass direct and indirect mountings, connections, supports, and couplings. Furthermore, "connected" and "coupled" are not restricted to physical or mechanical connections or couplings. In the description below, like reference numerals and labels are used to describe the same, similar or corresponding parts in the Figures. Other explicit and implicit definitions may be included below.

In an existing solution for the secondary positioning of the AGV, for example, as in Patent Publication CN107014291A, visual servo with help of a photo processing technology is provided to extract environment features to identify the actual offset. In addition, in the existing solution of the SLAM, a location and an angle of the AGV in a prebuilt map are identified based on the SLAM algorithm by means of scanning surrounding environment. However, in vision or SLAM based secondary positioning of the AGV, a large amount of data is required to be processed, which limits its reaction speed. Moreover, in the existing solution of utilizing 2D QR code, the code scanner based secondary positioning is sensitive to working environment and has constraint to many applications.

In order to at least partially solve the above and potentially other problems, embodiments of the present disclosure provide an improved solution for the secondary positioning of the AGV. The solution utilizes a measuring mechanism to calculate the offset between the actual stop position of the AGV and the target stop position by a magnetic sensor and a controller, for a subsequent compensational adjustment.

According to embodiments of the present disclosure, the magnetic sensor disposed on the AGV is configured to measure a misalignment between the magnetic sensor and a magnetic tape after the AGV changes from travelling to stop and to generate an offset signal representing the misalignment. The magnetic tape extends in a direction intersecting with a travelling path of the AGV. The controller electrically coupled to the magnetic sensor is configured to control the AGV based at least in part on the offset signal to thereby adjust the secondary positioning of the AGV relative to the peripheral equipment.

As such, the compensational adjustment for the secondary positioning is enabled by either the AGV or the peripheral equipment, thereby ensuring appropriate coupling of the AGV and peripheral equipment associated with the AGV Embodiments of the present disclosure provide an effective solution to ensure the repeatability for the secondary positioning, which has improved robustness for the AGV and reliable measurement signal not sensible to environments and various applications.

Hereinafter, some example embodiments of the present disclosure will be described in detail with reference to the accompanying drawings.

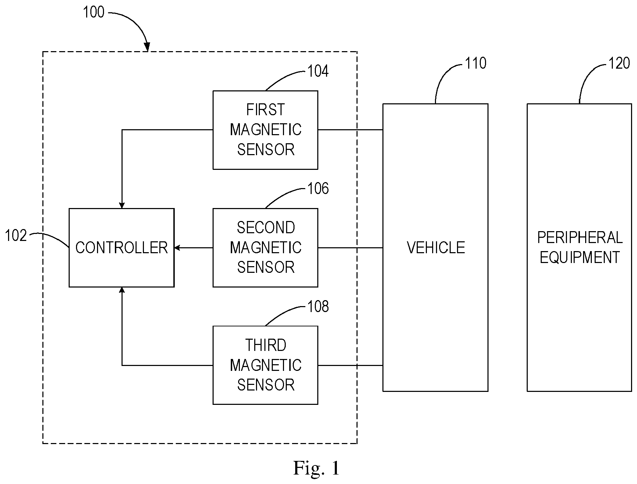

Fig. 1 illustrates a block diagram of an apparatus 100 for secondary positioning of a vehicle 110 according to an embodiment of the present disclosure. As shown, the apparatus 100 comprises a controller 102 and a first magnetic sensor 104. The first magnetic sensor 104 is disposed on the vehicle 110. In some embodiments, the controller 102 is disposed on the vehicle 110. In other embodiments, the controller 102 is disposed external to the vehicle 110. In some embodiments, the vehicle 110 is an automatic guided vehicle (AGV) and travels along a prescribed guiding path.

The first magnetic sensor 104 is configured to measure a first misalignment between the first magnetic sensor 104 and a first magnetic tape after the vehicle 110 changes from travelling to stop. The first magnetic tape extends in a direction intersecting with a travelling path of the vehicle 110. In some embodiments, the first magnetic tape extends in the direction substantially perpendicular to the travelling path. Moreover, the first magnetic sensor 104 is configured to generate a first offset signal representing the first misalignment. In some embodiments, the first misalignment or the first offset signal indicates an offset of the vehicle 110 from the first magnetic tape or a target stop position in a direction in parallel with the travelling path.

The controller 102 is electrically coupled to the first magnetic sensor 104 to receive the first offset signal. Then the vehicle 110 may be controlled based at least in part on the first offset signal. Thereby, the positioning of the vehicle 110 and/or peripheral equipment 120 associated with the vehicle 110 may be adjusted. In some embodiments, the peripheral equipment 120 comprises any kinds of various processing tools in the manufacturing plant. In some embodiments, after the vehicle 110 changes from travelling to stop, the controller 102 controls the vehicle 110 to adjust the positioning of the vehicle 110 to compensate the first misalignment measured by the first magnetic sensor 104. In other embodiments, the controller 102 causes the peripheral equipment 120 to shift a certain distance in order to compensate the first misalignment. In still other embodiments, the controller 102 causes both the vehicle 110 and the peripheral equipment 120 to adjust their positioning or shift a certain distance to compensate the first misalignment.

As such, the controller 102 is configured to adjust a secondary positioning of the vehicle 110 with respect to the peripheral equipment 120. In this way, the first misalignment may be compensated by the secondary positioning to ensure appropriate coupling of the vehicle 110 and the peripheral equipment 120 to deliver materials or items from the vehicle 110 to the peripheral equipment 120.

As shown in Fig. 1, in some embodiments, the apparatus 100 may further comprise a second magnetic sensor 106 and a third magnetic sensor 108 which are both electrically coupled to controller 102.

The second magnetic sensor 106 may be disposed on the vehicle 110 and may be configured to measure a second misalignment between the second magnetic sensor 106 and the travelling path after the stop of the vehicle 110. The second magnetic sensor 106 is further configured to generate a second offset signal representing the second misalignment. In some embodiments, the second misalignment or the second offset signal indicates a front offset of the vehicle 110 from the travelling path in a direction perpendicular to the travelling path.

The third magnetic sensor 108 may be disposed on the vehicle 110 and may be configured to measure a third misalignment between the third magnetic sensor 108 and the travelling path after the stop of the vehicle 100. The third magnetic sensor 108 is further configured to generate a third offset signal representing the third misalignment. In some embodiments, the third misalignment or the third offset signal indicates a rear offset of the vehicle 110 from the travelling path in a direction perpendicular to the travelling path.

In some embodiments, the second and third magnetic sensors 106 and 108 are configured as a pair of sensors disposed on the vehicle 110 for measuring an angle offset of the vehicle 110 from the travelling path by the second and third misalignments. With the arrangement of the first, second and third magnetic sensors 104, 106 and 108, various positional offsets of the vehicle 110 from the target stop position after its stop may be measured.

In those embodiments, the controller 102 may be configured to receive the second offset signal and the third offset signal from the second and third magnetic sensors 106, 108, respectively. Then the controller 102 may use the second and third offset signals together with the first offset signal to control the vehicle, more specifically, to adjust the secondary positioning of the vehicle 110 relative to the peripheral equipment 120. In some embodiments, the controller 102 controls to the vehicle 110 to adjust the positioning of the vehicle 110 in a first direction in parallel with the travelling path as well as in a second direction perpendicular to the travelling path, in order to compensate the misalignments. In other embodiments, the controller 102 causes the peripheral equipment 120 to adjust the positioning of the peripheral equipment 120 in both the first direction and the second direction, in order to compensate the misalignments. In still other embodiments, the controller 102 causes both the vehicle 110 and the peripheral equipment 120 to adjust their positioning to compensate the misalignments.

As such, the offset indicated by the first offset signal from the first magnetic sensor 104, the angle offset indicated by the combination of the second and third offset signals from the pair of second and third magnetic sensors 106 and 108 are determined after the vehicle 110 stops near the target stop position. In this way, the control of the secondary positioning may have a large adjusting range, and the first, second and third misalignments may be compensated by the secondary positioning to ensure appropriate coupling of the vehicle and the peripheral equipment 120.

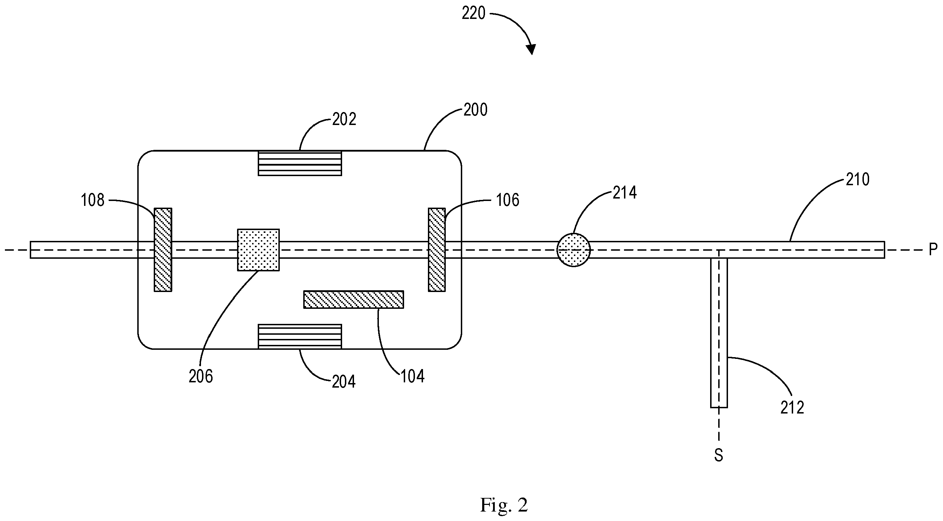

Fig. 2 illustrates a schematic diagram of a vehicle on a traveling path according to an embodiment of the present disclosure. In some embodiments, the vehicle 110 as shown in Fig. 1 is the automatic guided vehicle (AGV) 200. In this example, the AGV 200 is arranged within an automatic guided system 220 and comprises the apparatus 100 described above with reference to Fig. 1. It should be noted that, in other embodiments, the vehicle 110 may any other kinds of vehicle appropriate for the applications in the manufacturing plant.

Fig. 2 further illustrates the automatic guided system 220 that comprises the AGV 200, a first magnetic tape 212, and a second magnetic tape 210. The first and second magnetic tapes 210 and 212 are attached onto a floor surface of a travelling region of the AGV 200.

In some embodiments, the AGV 200 may comprise drive wheels 202 and 204 disposed at left and right sides thereof, respectively, as shown in Fig. 2. In some embodiments, the drive wheels 202 and 204 are controlled such that the AGV 200 travels along the prescribed guiding path. In some embodiments, the drive wheels 202 and 204 are controlled by the controller 102. It will be appreciated that the AGV 200 also comprises other components that are not shown in Fig. 2.

In the embodiments shown in Fig. 2, the first magnetic sensor 104 of the AGV 200 is disposed in parallel with the travelling path P on the AGV 200. In this way, the first magnetic sensor 104 may be used to measure the offset of the AGV 200 from the target position in the direction in parallel with the travelling path.

Moreover, the second magnetic sensor 106 of the AGV 200 is disposed in a direction substantially perpendicular to the travelling path P on a front side of the AGV 200, and the third magnetic sensor 108 of the AGV 200 is disposed in a direction substantially perpendicular to the travelling path P on a rear side of the AGV 200. In this way, the pair of the second and third magnetic sensors 106 and the 108 may be used to measure one offset at the front side of the AGV 200 and another offset at the rear side of the AGV 200 in the direction perpendicular to the travelling path, and thus may be able to measure the angle offset of the AGV 200 from the travelling path.

With the arrangement of the first, second and the third magnetic sensors 104, 106 and 108 on the AGV 200, it is able to measure various kinds of offsets that may occur when the AGV 200 stops near the target position.

In operation, the AGV 200 may be guided along the travelling path P. In some embodiments, the second magnetic tape 210 may be disposed along the travelling path P for navigating the AGV 200. In some embodiments, the second magnetic tape 210 is attached onto a floor surface of the manufacturing plant, such that the navigation of the AGV is implemented in the magnetic tape line guiding approach.

Alternatively, or in addition, in some embodiments, the AGV 200 may be guided along the travelling path P in other approach, such as the SLAM, the reflective plate laser scan, the vision guiding, the inertial guiding based on gyroscope, or the combination thereof, etc.

The first magnetic tape 212 extends in the direction intersecting with the travelling path P of the AGV 200, as shown in Fig. 2. In some embodiments, the first magnetic tape 212 extends in the direction substantially perpendicular to the travelling path P. In some embodiments, the first magnetic tape 212 is disposed to be perpendicular to the second magnetic tape 210. In some embodiments, the first magnetic tape 212 is disposed at a target stop position S for the AGV 200. In some embodiments, the first magnetic tape 212 has a polarity opposite to that of the second magnetic tape 210. In this way, it is possible to reduce or eliminate of interference caused by the first magnetic tape 212 on the second magnetic tape 210, thereby ensuring the navigation of the AGV 200 through the second magnetic tape 210.

In some embodiments, the automatic guided system 220 may further comprise a predetermined stop command point 214 disposed on the travelling path P. In some embodiments, the predetermined stop command point 214 is disposed on the second magnetic tape 210. As will be described below, the predetermined stop command point 214 indicates a position where the AGV 200 starts to brake.

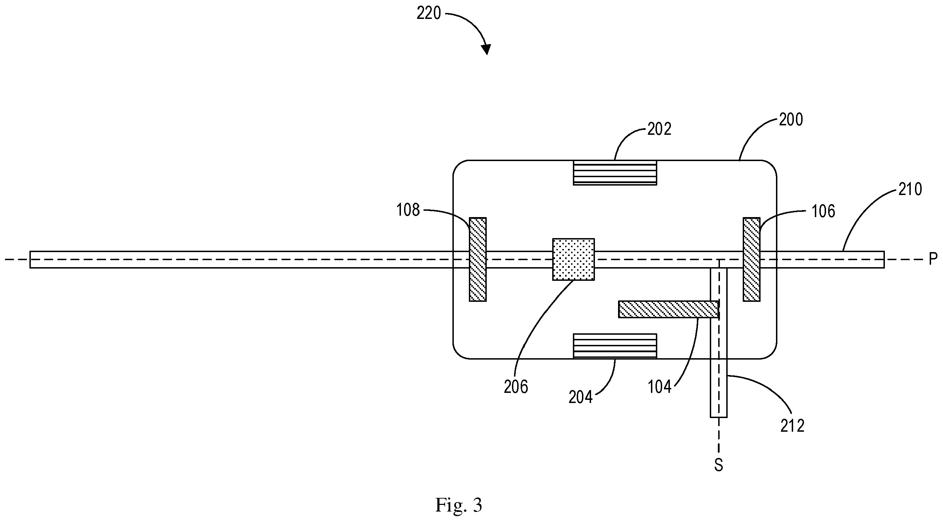

Fig. 3 illustrates a schematic diagram of the AGV 200 at the predetermined stop command point 214 according to an embodiment of the present disclosure. The AGV 200 travels from a position shown in Fig. 2 to a position shown in Fig. 3.

In some embodiments, the AGV 200 may further comprise a wireless reader 206 disposed thereon. In some embodiments, the wireless reader 206 may be disposed on the center line of the AGV 200. The wireless reader 206 may be configured to detect the predetermined stop command point 214 and to generate a stop command signal in response to detecting the predetermined stop command point 214. In some embodiments, the controller 102 is electrically coupled to the wireless reader 206, and the controller 102 is further configured to control the AGV 200 to brake in response to the stop command signal.

Referring to Fig. 3, when the wireless reader 206 detects the predetermined stop command point 214, the AGV 200 is controlled to start to brake. Since loads on the AGV 200 are different for various customized processes, braking distances of the AGV 200 from the predetermined stop command point 214 might be different for the respective customized processes. Therefore, the AGV 200 usually stops at different actual stop positions for the respective customized processes.

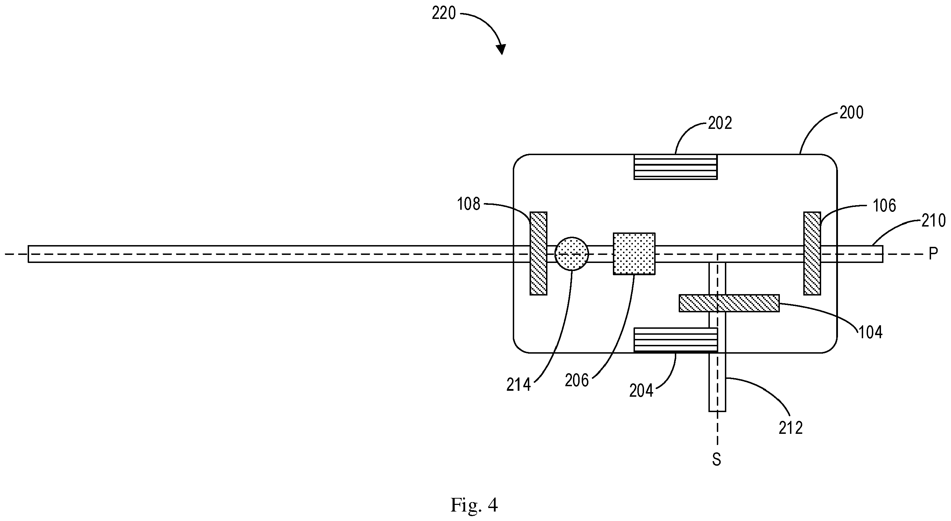

Fig. 4 illustrates a schematic diagram of the AGV 200 at the actual stop position according to an embodiment of the present disclosure. In this embodiment, the positional relationship between the first magnetic sensor 104 and the first magnetic tape 212 is measured to determine the offset of the actual stop position of the AGV 200 from the target stop position S.

The first magnetic sensor 104 is configured to measure the first misalignment between the first magnetic sensor 104 and the first magnetic tape 212 when the AGV 200 stops at the position shown in Fig. 4. In some embodiments, the first magnetic sensor 104 may measure the first misalignment between a center of the first magnetic sensor 104 and a center line of the first magnetic tape 212. Then the first magnetic sensor 104 generates the first offset signal representing the first misalignment. In some embodiments, the first offset signal indicates the first misalignment between the actual stop position of the AGV 200 and the target stop position S in the direction in parallel with the travelling path P. In this way, the offset of the actual stop position of the AGV 200 from the target position may be obtained by the first magnetic sensor 104.

The controller 102 is configured to control the AGV 200 based at least in part on the first offset signal to thereby adjust the secondary positioning of the AGV 200 with respect to the peripheral equipment 120 associated with the AGV 200. In some embodiments, the controller 102 causes the AGV 200 to shift based on the first offset signal to compensate the first misalignment as indicated by the first offset signal. Alternatively, in other embodiments, the controller 102 is configured to cause the peripheral equipment 120 to shift based on the first offset signal to compensate the first misalignment indicated by the first offset signal.

In some embodiments, the second magnetic sensor 106 measures the second misalignment between the second magnetic sensor 106 and the second magnetic tape 210 after the stop of the AGV 200. In some embodiments, the second magnetic sensor 106 may measure the second misalignment between a center of the second magnetic sensor 106 and a center line of the second magnetic tape 210. A second offset signal representing the measured second misalignment may be generated. In some embodiments, the second offset signal indicates the second misalignment between the actual stop position of the AGV 200 and the travelling path P in the direction perpendicular to the travelling path P. In this way, the front offset of the actual stop position of the AGV 200 from the target position at the front side may be obtained by the second magnetic sensor 106.

In some embodiments, the third magnetic sensor 108 measures the third misalignment between the third magnetic sensor 108 and the second magnetic tape 210 after the stop of the AGV 200. For example, the third misalignment is between a center of the third magnetic sensor 108 and the center line of the second magnetic tape 210. Then the third magnetic sensor 108 may generate a third offset signal representing the third misalignment. For example, the third offset signal indicates the third misalignment between the actual stop position of the AGV 200 and the travelling path P in the direction perpendicular to the travelling path P. In this way, the rear offset of the actual stop position of the AGV 200 from the target position at the rear side may be obtained by the third magnetic sensor 108.

With the arrangement of the pair of the second and third magnetic sensors 106 and 108, the angle offset of the AGV 200 from the travelling path P may be further derived from the front and rear offsets by the controller 102.

In some embodiments, the first, second and third offset signals are all used by the controller 102 to control the vehicle to adjust the secondary positioning of the AGV 200 relative to the peripheral equipment 120 associated with the AGV 200. Then, the compensation signal may be generated based on the first, second and third offset signals and used to control the adjustment for the secondary positioning, for example. For example, in some embodiments, the first, second and third offset signals are used to control the shift of the AGV 200 and/or the peripheral equipment 120 thereof to compensate the first, second and third misalignments, respectively.

It is to be noted that any of the first, second and third magnetic sensors 104, 106 and 108 may utilize any kind of magnetic sensor well-known in the art for measuring the positional misalignment. The scope of the present disclosure is not limited in this regard.

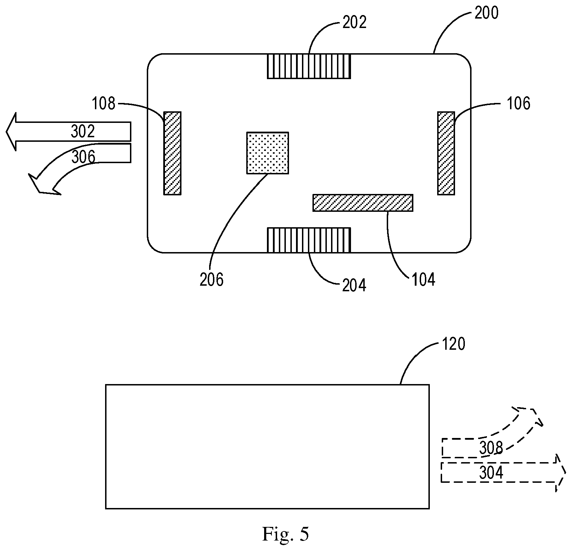

Fig. 5 illustrates a schematic diagram of the secondary positioning of the AGV 200 relative to the peripheral equipment 120 according to an embodiment of the present disclosure. The peripheral equipment 120 is located at a predetermined position, as shown in Fig. 5. Fig. 5 further shows that the AGV 200 is located at the actual stop position near the peripheral equipment 120.

As described above, the first offset signal is generated from the first magnetic sensor 104 after the stop of the AGV 200, and the controller 102 is configured to generate the compensation signal based on the first offset signal. In some embodiments, the controller 102 is configured to control the vehicle 200 to cause the drive wheels 202, 204 of the AGV 200 to shift so as to adjust the positioning of the AGV 200 based on the compensation signal, as indicated by a first arrow 302 shown in Fig. 5 in a direction in parallel with the travelling path. Alternatively, in other embodiments, the controller 102 may control the AGV 200 to remain stationary while sending the compensation signal to the peripheral equipment 120 to cause the peripheral equipment 120 to adjust the positioning of the peripheral equipment 120 based on the compensation signal, as indicated by a second arrow 304 shown in Fig. 5 in another direction in parallel with the travelling path.

In this way, the secondary positioning of the AGV relative to the peripheral equipment 120 is controlled to compensate the offset in the direction in parallel with the travelling path P.

Likewise, in those embodiments where the second and third offset signals are generated and the compensation signal is generated based on the first, second and third offset signals, the controller 102 may control the vehicle 200 to cause the drive wheels 202, 204 of the AGV 200 to shift so as to adjust the positioning of the AGV 200 based on the compensation signal, as indicated by a third arrow 306 shown in Fig. 5 in a direction in parallel with the travelling path as well as in a direction perpendicular to the travelling path. Alternatively, AGV 200 may stay stationary while the peripheral equipment 120 is controlled by the compensation signal to adjust the positioning of the peripheral equipment 120 based on the compensation signal, for example, as indicated by a fourth arrow 308 shown in Fig. 5 in another direction in parallel with the travelling path as well as in another direction perpendicular to the travelling path.

In this way, the secondary positioning of the AGV relative to the peripheral equipment 120 is controlled to compensate the offset in the direction in parallel with the travelling path P as well as the front offset and the rear offset in the direction perpendicular to the travelling path P.

According to the embodiments of the present disclosure, the first, second and third misalignments may be compensated, and thus the secondary positioning may have a large adjusting range. In addition, the offset signals generated from the magnetic sensors are reliable and have a small number of data, and thus there will be less calculation work for the controller and the secondary positioning may have a fast response. Moreover, the secondary positioning for the compensation for the misalignments may not affected by the AGV or the environment of the AGV, and thus there is no limitation of AGV applications.

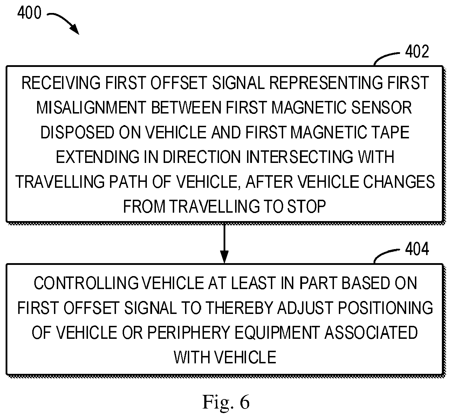

Fig. 6 illustrates a flow chart of a method 400 for secondary positioning of a vehicle according to an embodiment of the present disclosure. As shown in Fig. 6, the method 400 comprises block 402 and block 404.

At block 402, the method 400 comprises receiving the first offset signal representing the first misalignment between the first magnetic sensor 104 disposed on the AGV 200 and the first magnetic tape 212 extending in the direction intersecting with the travelling path P of the AGV 200, after the AGV 200 changes from travelling to stop.

At block 404, the method 400 comprises controlling the AGV 200 at least in part based on the first offset signal to thereby adjust the positioning of the AGV 200 or the periphery equipment 120 associated with the AGV 200.

In some embodiments, the controlling the AGV 200 to adjust the positioning comprises generating the compensation signal based on the first offset signal, and controlling the AGV 200 to cause the drive wheels 202, 204 of the AGV 200 to shift so as to adjust the positioning of the AGV 200 based on the compensation signal. Alternatively, the controlling the AGV 200 to adjust the positioning comprises generating the compensation signal based on the first offset signal, controlling the AGV 200 to remain stationary, and sending the compensation signal to the peripheral equipment 120 to cause the peripheral equipment 120 to adjust the positioning of the peripheral equipment 120 based on the compensation signal.

In some embodiments, the method 400 may further comprise receiving the second offset signal representing the second misalignment between the second magnetic sensor 106 disposed on the AGV 200 and the second magnetic tape 212 disposed along the travelling path P, after the stop of the automatic guided vehicle 200, and receiving the third offset signal representing the third misalignment between the third magnetic sensor 108 disposed on the AGV 200 and the second magnetic tape 212, after the stop of the automatic guided vehicle (200). In some embodiments, the method 400 may further comprise generating the compensation signal based on the first offset signal, the second offset signal, and the third offset signal, to control the positioning of the AGV 200 relative to the peripheral equipment 120 based on the compensation signal.

## Claims

1. An automatic guided system (220), **characterised in that** it comprises:
a first magnetic tape (212);
an apparatus (100) for secondary positioning of a vehicle (200), comprising:
a first magnetic sensor (104) disposed on the vehicle (200) and configured to measure a first misalignment between the first magnetic sensor (104) and the first magnetic tape (212) after the vehicle (200) changes from travelling to stop and to generate a first offset signal representing the first misalignment, wherein the first magnetic tape (212) extends in a direction intersecting with a travelling path (P) of the vehicle (200); and
a controller (102) configured to control the vehicle (200) based at least in part on the first offset signal to thereby adjust a positioning of the vehicle (200) and/or a peripheral equipment (120) associated with the vehicle (200);
wherein the first magnetic tape (212) extends in the direction perpendicular to the travelling path (P); wherein the system (220) comprises a second magnetic tape (210) that is disposed along the travelling path (P) for navigating the vehicle (200), and
wherein a polarity of the first magnetic tape (212) is opposite to a polarity of the second magnetic tape (210).

2. The automatic guided system (220) of claim 1, the controller (102) is further configured to:
generate a compensation signal based on the first offset signal; and control the vehicle (200) to cause drive wheels (202, 204) of the vehicle (200) to shift so as to adjust the positioning of the vehicle (200) based on the compensation signal,
or the controller (102) is further configured to:
generate a compensation signal based on the first offset signal;
control the vehicle (200) to remain stationary; and
send the compensation signal to the peripheral equipment (120) to cause the peripheral equipment (120) to adjust the positioning of the peripheral equipment (120) based on the compensation signal.

3. The automatic guided system (220) of claim 1 or 2, wherein the first magnetic sensor (104) is disposed in parallel with the travelling path (P) on the vehicle (200), preferably wherein the first magnetic sensor (104) is configured to measure the first misalignment between a center of the first magnetic sensor (104) and a center line of the first magnetic tape (212).

4. The automatic guided system (220) of any of the claims 1 to 3, wherein the first magnetic tape (212) is disposed at a target stop position (S) for the vehicle (200).

5. The automatic guided system (220) of any of claims 1 to 4, further comprising:
a second magnetic sensor (106) disposed on the vehicle (200) and configured to measure a second misalignment between the second magnetic sensor (106) and the second magnetic tape (210) after the stop of the vehicle (200) and to generate a second offset signal representing the second misalignment, the second magnetic tape (210) disposed along the travelling path (P) for navigating the vehicle (200); and
a third magnetic sensor (108) disposed on the vehicle (200) and configured to measure a third misalignment between the third magnetic sensor (108) and the second magnetic tape (210) after the stop of the vehicle (200) and to generate a third offset signal representing the third misalignment,
wherein the controller (102) is configured to control the vehicle (200) based on the first offset signal, the second offset, and the third offset signal,
preferably wherein
the second magnetic sensor (106) is disposed perpendicular to the travelling path (P) on a front side of the vehicle (200) and configured to measure the second misalignment between a center of the second magnetic sensor (106) and a center line of the second magnetic tape (210); and
the third magnetic sensor (108) is disposed perpendicular to the travelling path (P) on a rear side of the vehicle (200) and configured to measure the third misalignment between a center of the third magnetic sensor (108) and the center line of the second magnetic tape (210).

6. The automatic guided system (220) according to any of the preceding claims, further comprising an automatic guided vehicle (200), wherein the automatic guided vehicle comprises the apparatus (100).

7. The automatic guided system (220) of claim 6, further comprising:
a wireless reader (206) configured to detect a predetermined stop command point (214) disposed on the travelling path (P) and to generate a stop command signal in response to detecting the predetermined stop command point (214),
preferably wherein the controller (102) is further configured to control the vehicle (200) to brake in response to the stop command signal.

8. A method for secondary positioning of a vehicle (200) in an automatic guided system (220), comprising:
receiving a first offset signal representing a first misalignment between a first magnetic sensor (104) disposed on the vehicle (200) and a first magnetic tape (212) extending in a direction intersecting with a travelling path (P) of the vehicle (200), after the vehicle (200) changes from travelling to stop; and
controlling the vehicle (200) at least in part based on the first offset signal to thereby adjust a positioning of the vehicle (200) and/or a periphery equipment (120) associated with the vehicle (200);
wherein the first magnetic tape (212) extends in the direction perpendicular to the travelling path (P);
wherein a polarity of the first magnetic tape (212) is opposite to a polarity of a second magnetic tape (210) that is disposed along the travelling path (P) for navigating the vehicle (200).

9. The method of claim 8, wherein controlling the vehicle (200) to adjust the positioning comprises:
generating a compensation signal based on the first offset signal; and
controlling the vehicle (200) to cause drive wheels (202, 204) of the vehicle (200) to shift so as to adjust the positioning of the vehicle (200) based on the compensation signal,
or,
wherein controlling the vehicle (200) to adjust the positioning comprises:
generating a compensation signal based on the first offset signal;
controlling the vehicle (200) to remain stationary; and
sending the compensation signal to the peripheral equipment (120) to cause the peripheral equipment (120) to adjust the positioning of the peripheral equipment (120) based on the compensation signal.

10. The method of claim 9, further comprising:
receiving a second offset signal representing a second misalignment between a second magnetic sensor (106) disposed on the vehicle (200) and a second magnetic tape (212) disposed along the travelling path (P), after the stop of the vehicle (200);
receiving a third offset signal representing a third misalignment between a third magnetic sensor (108) disposed on the vehicle (200) and the second magnetic tape (212), after the stop of the vehicle (200); and
generating the compensation signal based on the first offset signal, the second offset signal, and the third offset signal.

## Patentansprüche

1. Automatisch geführtes System (220), **dadurch gekennzeichnet, dass** es umfasst:
ein erstes Magnetband (212);
eine Vorrichtung (100) zur sekundären Positionierung eines Fahrzeugs (200), umfassend:
einen ersten Magnetsensor (104), der an dem Fahrzeug (200) angeordnet und so konfiguriert ist, dass er eine erste Fehlausrichtung zwischen dem ersten Magnetsensor (104) und dem ersten Magnetband (212) misst, nachdem das Fahrzeug (200) von der Fahrt in den Stillstand wechselt, und ein erstes Offset-Signal erzeugt, das die erste Fehlausrichtung darstellt, wobei sich das erste Magnetband (212) in einer Richtung erstreckt, die einen Fahrweg (P) des Fahrzeugs (200) schneidet; und
eine Steuerung (102), die so konfiguriert ist, dass sie das Fahrzeug (200) zumindest teilweise auf der Grundlage des ersten Off-Signals steuert, um dadurch eine Positionierung des Fahrzeugs (200) und/oder eines mit dem Fahrzeug (200) verknüpften Peripheriegeräts (120) einzustellen;
wobei sich das erste Magnetband (212) in der Richtung senkrecht zu dem Fahrweg (P) erstreckt; wobei das System (200) ein zweites Band (210) umfasst, das entlang des Fahrwegs (P) zum Navigieren des Fahrzeugs (200) angeordnet ist, und
wobei eine Polarität des ersten Magnetbandes (212) entgegengesetzt zu einer Polarität des zweiten Magnetbandes (210) ist.

2. Automatisch geführtes System (220) nach Anspruch 1, wobei die Steuereinheit (102) ferner konfiguriert ist, um:
ein Kompensationssignal auf der Grundlage des ersten Offset-Signals zu erzeugen; und
das Fahrzeug (200) zu steuern, um die Antriebsräder (202, 204) des Fahrzeugs (200) zu veranlassen, sich zu verschieben, um die Positionierung des Fahrzeugs (200) basierend auf dem Kompensationssignal anzupassen,
oder die Steuerung (102) ist ferner konfiguriert, um:
ein Kompensationssignal auf der Grundlage des ersten Offset-Signals zu erzeugen;
das Fahrzeug (200) so zu steuern, dass es stationär bleibt; und
das Kompensationssignal an das Peripheriegerät (120) zu senden, um das Peripheriegerät (120) zu veranlassen, die Positionierung des Peripheriegeräts (120) auf der Grundlage des Kompensationssignals anzupassen.

3. Automatisch geführtes System (220) nach Anspruch 1 oder 2, wobei der erste Magnetsensor (104) parallel zum Fahrweg (P) auf dem Fahrzeug (200) angeordnet ist, vorzugsweise wobei der erste Magnetsensor (104) so konfiguriert ist, dass er die erste Fehlausrichtung zwischen einer Mitte des ersten Magnetsensors (104) und einer Mittellinie des ersten Magnetbandes (212) misst.

4. Automatisch geführtes System (220) nach einem der Ansprüche 1 bis 3, wobei das erste Magnetband (212) an einer Zielanschlagsposition (S) für das Fahrzeug (200) angeordnet ist.

5. Automatisch geführtes System (220) nach einem der Ansprüche 1 bis 4, ferner umfassend:
einen zweiten Magnetsensor (106), der an dem Fahrzeug (200) angeordnet und so konfiguriert ist, dass er eine zweite Fehlausrichtung zwischen dem zweiten Magnetsensor (106) und dem zweiten Magnetband (210) nach dem Anhalten des Fahrzeugs (200) misst und ein zweites Offset-Signal erzeugt, das die zweite Fehlausrichtung darstellt, wobei das zweite Magnetband (210) entlang des Fahrwegs (P) zum Navigieren des Fahrzeugs (200) angeordnet ist; und
einen dritten Magnetsensor (108), der an dem Fahrzeug (200) angeordnet und so konfiguriert ist, dass er eine dritte Fehlausrichtung zwischen dem dritten Magnetsensor (108) und dem zweiten Magnetband (210) nach dem Anhalten des Fahrzeugs (200) misst und ein drittes Offset-Signal erzeugt, das die dritte Fehlausrichtung darstellt,
wobei die Steuerung (102) so konfiguriert ist, dass sie das Fahrzeug (200) auf der Grundlage des ersten Off-Signals, des zweiten Offsets und des dritten Offset-Signals steuert, vorzugsweise wobei
der zweite Magnetsensor (106) senkrecht zu dem Fahrweg (P) an einer Vorderseite des Fahrzeugs (200) angeordnet und so konfiguriert ist, dass er die zweite Fehlausrichtung zwischen einem Mittelpunkt des zweiten Magnetsensors (106) und einer Mittellinie des zweiten Magnetbands (210) misst; und
der dritte Magnetsensor (108) senkrecht zum Fahrweg (P) auf einer Rückseite des Fahrzeugs (200) angeordnet und so konfiguriert ist, dass er die dritte Fehlausrichtung zwischen einem Mittelpunkt des dritten Magnetsensors (108) und der Mittellinie des zweiten Magnetbandes (210) misst.

6. Automatisch geführtes System (220) nach einem der vorhergehenden Ansprüche, das ferner ein automatisch geführtes Fahrzeug (200) umfasst, wobei das automatisch geführte Fahrzeug die Vorrichtung (100) umfasst.

7. Automatisch geführtes System (220) nach Anspruch 6, ferner umfassend:
ein drahtloses Lesegerät (206), das so konfiguriert ist, dass es einen auf dem Fahrweg (P) angeordneten vorbestimmten Haltebefehlspunkt (214) erfasst und als Reaktion auf die Erfassung des vorbestimmten Haltebefehlspunkts (214) ein Haltebefehlssignal erzeugt,
vorzugsweise wobei die Steuerung (102) ferner so konfiguriert ist, dass sie das Fahrzeug (200) so steuert, dass es in Reaktion auf das Stoppbefehlssignal bremst.

8. Verfahren zur sekundären Positionierung eines Fahrzeugs (200) in einem automatisch geführten System (220), umfassend:
Empfangen eines ersten Offset-Signals, das eine erste Fehlausrichtung zwischen einem ersten Magnetsensor (104), der an dem Fahrzeug (200) angeordnet ist, und einem ersten Magnetband (212), das sich in einer Richtung erstreckt, die einen Fahrweg (P) des Fahrzeugs (200) schneidet, darstellt, nachdem das Fahrzeug (200) von der Fahrt in den Stillstand wechselt; und Steuern des Fahrzeugs (200) zumindest teilweise auf der Grundlage des ersten Offset-Signals, um dadurch eine Positionierung des Fahrzeugs (200) und/oder einer mit dem Fahrzeug (200) verknüpften Peripherieausrüstung (120) einzustellen;
wobei sich das erste Magnetband (212) in der Richtung senkrecht zu dem Fahrweg (P) erstreckt;
wobei eine Polarität des ersten Magnetbandes (212) entgegengesetzt zu einer Polarität eines zweiten Magnetbandes (210) ist, das entlang des Fahrwegs (P) zum Navigieren des Fahrzeugs (200) angeordnet ist.

9. Verfahren nach Anspruch 8, wobei das Steuern des Fahrzeugs (200) zum Einstellen der Positionierung umfasst:
Erzeugen eines Kompensationssignals basierend auf dem ersten Offset-Signal; und
Steuern des Fahrzeugs (200), um zu bewirken, dass sich die Antriebsräder (202, 204) des Fahrzeugs (200) verschieben, um die Positionierung des Fahrzeugs (200) basierend auf dem Kompensationssignal einzustellen,
oder,
wobei das Steuern des Fahrzeugs (200) zum Einstellen der Positionierung umfasst:
Erzeugen eines Kompensationssignals basierend auf dem ersten Offset-Signal;
Steuern des Fahrzeugs (200), um stationär zu bleiben; und
Senden des Kompensationssignals an das Peripheriegerät (120), um das Peripheriegerät (120) zu veranlassen, die Positionierung des Peripheriegeräts (120) basierend auf dem Kompensationssignal anzupassen.

10. Verfahren nach Anspruch 9, das ferner umfasst:
Empfangen eines zweiten Offset-Signals, das eine zweite Fehlausrichtung zwischen einem zweiten Magnetsensor (106), der an dem Fahrzeug (200) angeordnet ist, und einem zweiten Magnetband (212), das entlang des Fahrwegs (P) angeordnet ist, nach dem Anhalten des Fahrzeugs (200) darstellt;
Empfangen eines dritten Offset-Signals, das eine dritte Fehlausrichtung zwischen einem dritten Magnetsensor (108), der an dem Fahrzeug (200) angeordnet ist, und dem zweiten Magnetband (212) nach dem Anhalten des Fahrzeugs (200) darstellt; und
Erzeugen des Kompensationssignals auf der Grundlage des ersten Offset-Signals, des zweiten Offset-Signals und des dritten Offset-Signals.

## Revendications

1. Système guidé automatique (220), **caractérisé en ce qu'**il comprend :
une première bande magnétique (212) ;
un appareil (100) pour le positionnement secondaire d'un véhicule (200), comprenant :
un premier capteur magnétique (104) disposé sur le véhicule (200) et configuré pour mesurer un premier désalignement entre le premier capteur magnétique (104) et la première bande magnétique (212) après que le véhicule (200) passe du déplacement à l'arrêt et pour générer un premier signal de décalage représentant le premier désalignement, dans lequel la première bande magnétique (212) s'étend dans une direction croisant un chemin de déplacement (P) du véhicule (200) ; et
une unité de commande (102) configurée pour commander le véhicule (200) sur la base au moins en partie du premier signal de décalage pour ainsi ajuster un positionnement du véhicule (200) et/ou d'un équipement périphérique (120) associé au véhicule (200) ;
dans lequel la première bande magnétique (212) s'étend dans la direction perpendiculaire au chemin de déplacement (P) ; dans lequel le système (220) comprend une seconde bande magnétique (210) qui est disposée le long du chemin de déplacement (P) pour permettre la navigation du véhicule (200), et
dans lequel une polarité de la première bande magnétique (212) est opposée à une polarité de la seconde bande magnétique (210).

2. Système guidé automatique (220) selon la revendication 1, l'unité de commande (102) est en outre configurée pour :
générer un signal de compensation sur la base du premier signal de décalage ; et
commander le véhicule (200) pour faire en sorte que des roues motrices (202, 204) du véhicule (200) changent de position afin d'ajuster le positionnement du véhicule (200) sur la base du signal de compensation,
ou l'unité de commande (102) est en outre configurée pour :
générer un signal de compensation sur la base du premier signal de décalage ;
commander le véhicule (200) pour qu'il reste stationnaire ; et
envoyer le signal de compensation à l'équipement périphérique (120) pour faire en sorte que l'équipement périphérique (120) ajuste le positionnement de l'équipement périphérique (120) sur la base du signal de compensation.

3. Système guidé automatique (220) selon la revendication 1 ou 2, dans lequel le premier capteur magnétique (104) est disposé en parallèle au chemin de déplacement (P) sur le véhicule (200), de préférence dans lequel le premier capteur magnétique (104) est configuré pour mesurer le premier désalignement entre un centre du premier capteur magnétique (104) et une ligne centrale de la première bande magnétique (212).

4. Système guidé automatique (220) selon l'une quelconque des revendications 1 à 3, dans lequel la première bande magnétique (212) est disposée à une position d'arrêt cible (S) pour le véhicule (200).

5. Système guidé automatique (220) selon l'une quelconque des revendications 1 à 4, comprenant en outre:
un deuxième capteur magnétique (106) disposé sur le véhicule (200) et configuré pour mesurer un deuxième désalignement entre le deuxième capteur magnétique (106) et la seconde bande magnétique (210) après l'arrêt du véhicule (200) et pour générer un deuxième signal de décalage représentant le deuxième désalignement, la seconde bande magnétique (210) étant disposée le long du chemin de déplacement (P) pour permettre la navigation du véhicule (200) ; et
un troisième capteur magnétique (108) disposé sur le véhicule (200) et configuré pour mesurer un troisième désalignement entre le troisième capteur magnétique (108) et la seconde bande magnétique (210) après l'arrêt du véhicule (200) et pour générer un troisième signal de décalage représentant le troisième désalignement,
dans lequel l'unité de commande (102) est configurée pour commander le véhicule (200) sur la base du premier signal de décalage, du deuxième signal de décalage, et du troisième signal de décalage,
de préférence dans lequel
le deuxième capteur magnétique (106) est disposé perpendiculairement au chemin de déplacement (P) sur un côté avant du véhicule (200) et configuré pour mesurer le deuxième désalignement entre un centre du deuxième capteur magnétique (106) et une ligne centrale de la seconde bande magnétique (210) ; et
le troisième capteur magnétique (108) est disposé perpendiculairement au chemin de déplacement (P) sur un côté arrière du véhicule (200) et configuré pour mesurer le troisième désalignement entre un centre du troisième capteur magnétique (108) et la ligne centrale de la seconde bande magnétique (210).

6. Système guidé automatique (220) selon l'une quelconque des revendications précédentes, comprenant en outre un véhicule guidé automatique (200), dans lequel le véhicule guidé automatique comprend l'appareil (100).

7. Système guidé automatique (220) selon la revendication 6, comprenant en outre :
un lecteur sans fil (206) configuré pour détecter un point prédéterminé d'instruction d'arrêt (214) disposé sur le chemin de déplacement (P) et pour générer un signal d'instruction d'arrêt en réponse à la détection du point prédéterminé d'instruction d'arrêt (214),
de préférence dans lequel l'unité de commande (102) est en outre configuré pour commander le véhicule (200) pour freiner en réponse au signal d'instruction d'arrêt.

8. Procédé pour le positionnement secondaire d'un véhicule (200) dans un système guidé automatique (220), comprenant :
la réception d'un premier signal de décalage représentant un premier désalignement entre un premier capteur magnétique (104) disposé sur le véhicule (200) et une première bande magnétique (212) s'étendant dans une direction croisant un chemin de déplacement (P) du véhicule (200), après que le véhicule (200) passe du déplacement à l'arrêt ; et
la commande du véhicule (200) au moins en partie sur la base du premier signal de décalage pour ainsi ajuster un positionnement du véhicule (200) et/ou d'un équipement périphérique (120) associé au véhicule (200),
dans lequel la première bande magnétique (212) s'étend dans la direction perpendiculaire au chemin de déplacement (P) ;
dans lequel une polarité de la première bande magnétique (212) est opposée à une polarité d'une seconde bande magnétique (210) qui est disposée le long du chemin de déplacement (P) pour permettre la navigation du véhicule (200) .

9. Procédé selon la revendication 8, dans lequel la commande du véhicule (200) pour ajuster le positionnement comprend :
la génération d'un signal de compensation sur la base du premier signal de décalage ; et
la commande du véhicule (200) pour faire en sorte que des roues motrices (202, 204) du véhicule (200) changent de position afin d'ajuster le positionnement du véhicule (200) sur la base du signal de compensation,
ou,
dans lequel la commande du véhicule (200) pour ajuster le positionnement comprend :
la génération d'un signal de compensation sur la base du premier signal de décalage ;
la commande du véhicule (200) pour qu'il reste stationnaire ; et
l'envoi du signal de compensation à l'équipement périphérique (120) pour faire en sorte que l'équipement périphérique (120) ajuste le positionnement de l'équipement périphérique (120) sur la base du signal de compensation.

10. Procédé selon la revendication 9, comprenant en outre :
la réception d'un deuxième signal de décalage représentant un deuxième désalignement entre un deuxième capteur magnétique (106) disposé sur le véhicule (200) et une seconde bande magnétique (212) disposée le long du chemin de déplacement (P), après l'arrêt du véhicule (200) ;
la réception d'un troisième signal de décalage représentant un troisième désalignement entre un troisième capteur magnétique (108) disposé sur le véhicule (200) et la seconde bande magnétique (212), après l'arrêt du véhicule (200) ; et
la génération du signal de compensation sur la base du premier signal de décalage, du deuxième signal de décalage, et du troisième signal de décalage.
